# EUROPEAN PATENT APPLICATION

(11) **EP 3 767 597 A1**
(43) Date of publication of application: **20.01.2021**
(21) Application number: 19766768.6
(22) Date of filing: 11.03.2019
(51) Int. Cl.: G07F 11/00

(54) **AUTOMATIC VENDING METHOD AND APPARATUS**

(30) Priority: 12.03.2018 CN 201810201299
(71) Applicant: Deepblue Technology (Shanghai) Co., Ltd., Changning District, Shanghai 200336 (CN)
(72) Inventor: CHENG, Nan, Shanghai 200336 (CN)
(74) Representative: RGTH
(86) International application number: PCT/CN2019/077704
(87) International publication number: WO 2019/174553

(57) **Abstract**

Provided are an automatic vending method and apparatus. The method comprises: when an access command from a user is received, unlocking a cabinet door (3) and starting a camera module (4) (S102); capturing, by means of the camera module (4), multiple frames of images at the cabinet door (3) when the cabinet door (3) is in an unlocked state (S 103); determining whether the user performs a pickup operation according to multiple frames of images (S 104); when it is determined that there is a pickup operation, recognizing an item-pickup image from the multiple frames of images (S 105); determining, according to the plurality of pickup images, whether any item has been picked up (S 106); if there an item has been picked up, acquiring item information of the picked-up item (S 107); and when it is detected that the cabinet door (3) is locked, completing a payment transaction with a payment account bound to the user according to at least the item information (S109). A user can actually touch, select and purchase an item he/she needs, pick up the item and close the door to realize automatic settlement, so that the process of cash or mobile payment by the user is eliminated. Moreover, it is possible to more accurately determine whether the user has picked up the item.

## Description

This application claims priority of Chinese Patent Application No. 201810201299.5, filed with the China National Intellectual Property Administration (CNIPA) on March 12, 2018 and entitled "AUTOMATIC VENDING METHOD", the entire content of which is incorporated herein by reference.

### Field

The present disclosure relates to the field of automatic devices and in particular to a method and apparatus for automatic vending.

### Background

Nowadays, with the popularity of the Internet, shopping manners of people are becoming more and more diverse, autonomous shopping is becoming a more and more popular shopping manner. In related art, autonomous shopping is generally realized by virtue of a self-service vending machine. When a user needs to purchase goods on the self-service vending machine, firstly, a commodity is chosen by performing an operation on an operation panel of the self-service vending machine, then, payment is performed by putting paper currencies into a payment port of the vending machine or scanning a two-dimensional code for payment by virtue of a mobile terminal, and finally, the chosen commodity is taken away from a goods taken-out opening of the vending machine.

There are following problems at least in the related art: for the existing self-service vending machine, an operation process that the user purchases the goods is rather complicated; besides, the user may only observe the required goods, with glass of the self-service vending machine interposed therebetween, but not some detailed information such as manufacturers, production date and shelf life of the goods; and further, after payment is completed, there is a risk that the goods are stuck when the goods fall into the goods taken-out opening from a shopping channel through the rotation of a spring driven by a machine.

### Summary

The purpose of an embodiment of the present disclosure is to provide a method and apparatus for automatic vending by which a user may choose goods required by herself/himself by true touch, automatic settlement may be realized by closing a door after the goods are taken away, and thus, a process of cash or mobile payment performed by the user is omitted; and it may be relatively accurately judged whether the user takes out the goods.

In order to solve the above-mentioned technical problems, in a first aspect, an embodiment of the present disclosure provides a method for automatic vending applied to an apparatus for automatic vending. The apparatus for automatic vending includes a control module, a cabinet body, at least one cabinet door and at least one camera module. The method includes the steps of: unlocking the at least one cabinet door and starting the at least one camera module in response to an access command of a user; capturing multi-frame images at the at least one cabinet door in an unlocking state by virtue of the at least one camera module; determining whether a pick-up operation for goods is performed by the user according to the multi-frame images; recognizing a plurality of pick-up images from the multi-frame images when the pick-up operation for goods is performed; determining whether any goods have been taken out according to the plurality of pick-up images; acquiring goods information of taken-out goods when goods have been taken out; and completing a payment transaction with a payment account bound with the user at least according to the goods information upon detecting that the at least one cabinet door is locked.

Compared with the prior art, the cabinet door is unlocked and the camera module is started when the access command of the user is received, so that the multi-frame images at the cabinet door in the unlocking state may be captured by virtue of the camera module; next, it is determined whether the pick-up operation for goods is performed by the user according to the multi-frame images, and the pick-up images are recognized from the multi-frame images when the pick-up operation for goods is performed; then, it is determined whether any goods have been taken out according to the plurality of pick-up images, the goods information of the taken-out goods is acquired when the goods have been taken out, when it is detected that the cabinet door is locked, the user has completed goods taking out, and the payment transaction with the payment account bound with the user is completed at least according to the goods information. Therefore, the user may choose goods required by herself/himself by true touch, automatic settlement may be realized by closing a door after the goods are taken away, and thus, a process of cash or mobile payment performed by the user is omitted; and it may be relatively accurately judged whether the user takes out the goods. For the user, the overall shopping link may be completed by only opening the door, taking out the goods and closing the door, so that high convenience is achieved, and the shopping experience of the user is improved.

In one embodiment, determining whether the pick-up operation for goods is performed by the user according to the multi-frame images specifically includes the step of: determining whether it is detected that the user stretches a hand into or out of the cabinet body according to the multi-frame images.

The present embodiment provides a specific manner of determining whether the pick-up operation for goods is performed by the user.

In one embodiment, determining whether it is detected that the user stretches a hand into or out of the cabinet body according to the multi-frame images specifically includes the steps of: taking a first-frame image in the multi-frame images as a reference image, and comparing images other than the first-frame image in the multi-frame images with the reference image sequentially; and determining that it is detected that the user stretches the hand into or out of the cabinet body, when continuous multi-frame images different from the reference image exist in the multi-frame images and the a preset frame number of the continuous multi-frame images is reached.

The present embodiment provides a specific implementation manner of determining whether it is detected that the user stretches the hand into or out of the cabinet body.

In one embodiment, the determining whether any goods have been taken out according to the plurality of pick-up images specifically includes the steps of: extracting images within a preset region from each of the continuous multi-frame images as the plurality of pick-up image; matching each of the plurality of pick-up images with each of preset goods models sequentially, and determining whether a goods model matched with M continuous images in the plurality of pick-up image exists; where when the goods model matched with the M continuous images exists, a taken-out coverage state for goods corresponding to the plurality of pick-up images is set as a covered state; and when the goods model matched with the M continuous images does not exist, a taken-out coverage state for goods corresponding to the plurality of pick-up images is set as an uncovered state; and where M is a positive integer and is smaller than a total frame number of the continuous multi-frame images; and determining that there are goods that have been taken out when the taken-out coverage state for goods corresponding to the plurality of pick-up images is changed from the uncovered state to the covered state.

The present embodiment provides a specific implementation manner of determining whether any goods have been taken out according to the plurality of pick-up images.

In one embodiment, the acquiring the goods information of the taken-out goods specifically includes the steps of: acquiring one or more goods models successfully matched with last N frames of the plurality of pick-up images, and determining whether a number of the one or more goods models successfully matched with the last N frames of the plurality of pick-up images is more than one, where N is a positive integer and is smaller than the total frame number of the continuous multi-frame images; where when determining that the number of the one or more goods models successfully matched with the last N frames of the plurality of pick-up images is more than one, a goods model corresponding to a highest matching frequency is a goods model of the taken-out goods; when determining that the number of the one or more goods models successfully matched with the last N frames of the plurality of pick-up images is one, a successfully matched goods model is a goods model of the taken-out goods; and acquiring the goods information of the taken-out goods according to a preset correspondence between the goods model and the goods information.

The present embodiment provides a specific implementation manner of acquiring the goods information of the taken-out goods.

In one embodiment, the cabinet body is provided with a shelf for storing goods; the automatic vending apparatus further includes a plurality of gravity sensors arranged at the bottom of the shelf. Change information of a weight of the shelf is detected by virtue of the plurality of gravity sensors when the multi-frame images at the at least one cabinet door in the unlocking state are captured by virtue of the at least one camera module; and the completing the payment transaction with a payment account bound with the user at least according to the goods information specifically includes the step of: completing the payment transaction with the payment account bound with the user according to the change information of the weight and the goods information.

In the present embodiment, the bottom of the shelf is provided with the gravity sensors for detecting the change information of the weight of the shelf. When the weight of the goods shelf is reduced, it is proven that the user takes out the goods, and therefore, the accuracy of determining whether the user takes out the goods is improved in combination with the change information of the weight and the goods information.

In one embodiment, the cabinet body is provided with a shelf for storing goods; the shelf includes a plurality of goods channels; and each of the plurality of goods channels is for storing goods. The apparatus for automatic vending further includes a plurality of distance sensors, and the plurality of distance sensors are equal to the plurality of goods channels in number and are in one-to-one correspondence to the plurality of goods channels; change information of a distance from goods on a corresponding goods channel to the rear end of the corresponding goods channel is acquired by virtue of each of the plurality of distance sensors when the multi-frame images at the at least one cabinet door in the unlocking state are captured by virtue of the at least one camera module; and the completing the payment transaction with the payment account bound with the user according to the goods information specifically includes the step of: completing the payment transaction with the payment account bound with the user according to the change information of the distance and the goods information.

In the present embodiment, the rear ends of all the goods channels are provided with the distance sensors for acquiring the change information of the distance from the rear ends of the goods channels to the goods. When the distance is increased, the user takes out the goods, and therefore, the accuracy of determining whether the user takes out the goods is improved in combination with the change information of the distance and the goods information.

In one embodiment, the apparatus for automatic vending further includes a communication module, and the control module is connected to a cloud server by the communication module. The completing the payment transaction with the payment account bound with the user at least according to the goods information specifically includes the steps of: transmitting the goods information and the payment account bound with the user to the cloud server; and completing the payment transaction by virtue of the cloud server.

The present embodiment provides a specific implementation manner of completing the payment transaction with the user.

In one embodiment, the apparatus for automatic vending further includes an information input device connected to the control module. The unlocking the at least one cabinet door and starting the at least one camera module in response to the access command of the user specifically includes the steps of: receiving the access command of the user by virtue of the information input device, verifying the user by virtue of the cloud server upon receiving the access command, and unlocking the at least one cabinet door and starting the at least one camera module upon a verification is passed.

The present embodiment provides a specific implementation manner of receiving the access command of the user.

In one embodiment, the cabinet body is further provided with an identification code. When the user scans the identification code by virtue of a mobile terminal, the mobile terminal transmits log-in information to the cloud server, and the cloud server verifies the log-in information and transmits the access command of the user to the control module when the verification is passed.

The present embodiment provides another specific implementation manner of receiving the access command of the user.

In a second aspect, an embodiment of the present disclosure provides an apparatus for automatic vending. The apparatus for automatic vending includes a control module, a cabinet body, at least one cabinet door and at least one camera module, where the cabinet body is provided with a shelf for storing goods;
the control module is configured to unlock the at least one cabinet door and start the ay least one camera module in response to an access command of a user; to capture multi-frame images at the at least one cabinet door in an unlocking state by virtue of the at least one camera module; to determine whether a pick-up operation for goods is performed by the user according to the multi-frame images; to recognize a plurality of pick-up images from the multi-frame images when the pick-up operation for goods is performed; to determine whether any goods have been taken out according to the plurality of pick-up images; to acquire goods information of the taken-out goods when goods have been taken out; and to complete a payment transaction with a payment account bound with the user at least according to the goods information upon detecting that the at least one cabinet door is locked; and
the at least one camera module is configured to capture the multi-frame images at the at least one cabinet door in the unlocking state.

In a third aspect, an embodiment of the present disclosure further provides a computer readable storage medium including a program code. When operating on a computer device, the program code enables the computer device to perform the steps of any one method according to the above-mentioned first aspect.

In addition, technical effects brought by any one implementation manner in the second to third aspects may refer to technical effects brought by different implementation manners in the first aspect, the descriptions thereof are omitted herein.

### Brief Description of the Drawings

One or more embodiments are exemplarily described by virtue of accompanying drawings corresponding to the embodiments, but are not restricted by these exemplary descriptions, elements with same reference numerals in the accompanying drawings indicate similar elements, and proportions are not restricted by the accompanying drawings unless otherwise denoted.
Fig. 1 is a schematic block diagram of an apparatus for automatic vending according to a first embodiment of the present disclosure;
Fig. 2 is a front view of the apparatus for automatic vending according to the first embodiment of the present disclosure;
Fig. 3 is a specific flow diagram of a method for automatic vending according to the first embodiment of the present disclosure;
Fig. 4 is a specific flow diagram of a method for automatic vending according to a second embodiment of the present disclosure;
Fig. 5 is a specific flow diagram of a method for automatic vending according to a third embodiment of the present disclosure;
Fig. 6 is a schematic block diagram of an apparatus for automatic vending according to the third embodiment of the present disclosure;
Fig. 7 is a side view of the apparatus for automatic vending according to the third embodiment of the present disclosure;
Fig. 8 is a specific flow diagram of a method for automatic vending according to a fourth embodiment of the present disclosure;
Fig. 9 is a schematic block diagram of an apparatus for automatic vending according to the fourth embodiment of the present disclosure;
Fig. 10 is a schematic diagram of a goods channel of a shelf of the apparatus for automatic vending according to the fourth embodiment of the present disclosure;
Fig. 11 is a specific flow diagram of a method for automatic vending according to a fifth embodiment of the present disclosure;
Fig. 12 is a schematic block diagram of an apparatus for automatic vending according to the fifth embodiment of the present disclosure, where a control module is connected to a cloud server by a communication module; and
Fig. 13 is a schematic block diagram of the apparatus for automatic vending according to the fifth embodiment of the present disclosure, wherein the control module receives an access command of a user by an information input device.

### Detailed Description of the Embodiments

In order to make the purpose, technical solutions and advantages of the embodiments of the present disclosure clearer, each embodiment of the present disclosure will be described in detail below in conjunction with the accompanying drawings. However, those of ordinary skilled in the art may understand that many technical details are proposed for a reader to better understand the present disclosure in each embodiment of the present disclosure. However, technical solutions required to be protected by the present disclosure may also be achieved even if there are no technical details as well as various changes and modifications based on the following embodiments.

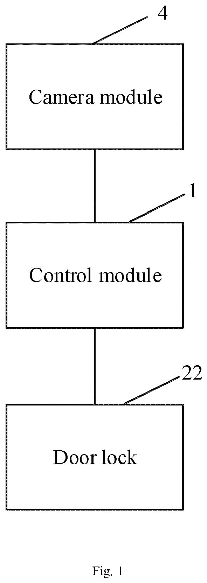

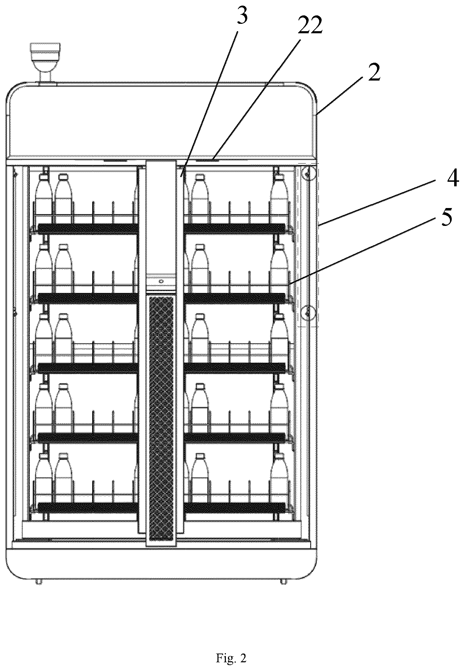

A first embodiment of the present disclosure relates to a method for automatic vending applied to an apparatus for automatic vending. Referring to Fig. 1 and Fig. 2, the apparatus for automatic vending includes a control module 1, a cabinet body 2, at least one cabinet door 3 and at least one camera module 4, where the cabinet body 2 is provided with a shelf 5 for storing goods. In the present embodiment and the following embodiments, the goods are, for example but not limited to, bottled beverages and may also be other goods such as snacks and biscuits. In the present embodiment, the cabinet body 2 is provided with a door lock 22 for locking the cabinet door 3. When the cabinet door 3 is locked, it is forbidden that a user opens the cabinet door 3 to take out the goods from the shelf 5; and when the cabinet door 3 is unlocked, the user may open the cabinet door 3 to take out the goods from the shelf 5.

It should be noted that the figures in which the apparatus for automatic vending includes two cabinet doors 3 and the camera module 4 includes two cameras are schematically described, however, there are no any limitations on the number of the cabinet doors 3 and the number of the cameras of the camera module 4 in the present embodiment.

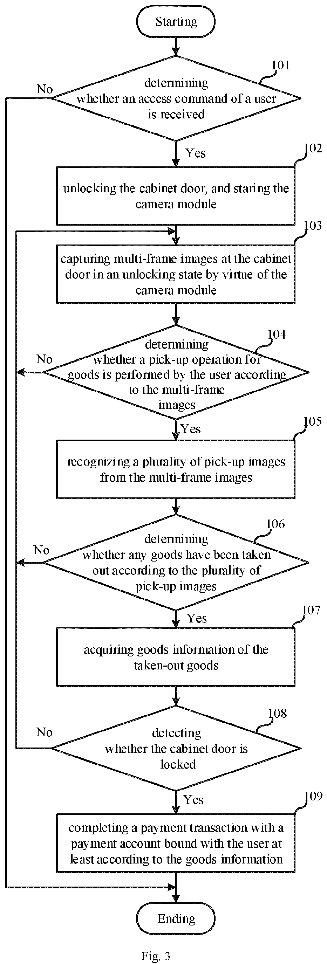

A specific process of the method for automatic vending in the present embodiment is shown as Fig. 3.

Step 101, determining whether an access command of a user is received. If yes, step 102 is performed; or else, the step is directly ended.

Specifically, the control module 1 determines whether the access command of the user is received. If yes, step 102 is performed; or else, the step is directly ended.

Step 102, unlocking the cabinet door, and staring the camera module.

Specifically, the control module 1 controls the door lock 22 to be unlocked, unlocks the cabinet door 3 and also starts the camera module 4.

Step 103, capturing multi-frame images at the cabinet door in an unlocking state by virtue of the camera module.

Specifically, when the cabinet door 3 is in the unlocking state, the multi-frame images at the cabinet door 3 are captured by virtue of the camera module 4.

Step 104, determining whether a pick-up operation for goods is performed by the user according to the multi-frame images. If yes, step 105 is performed; if not, the operation returns to step 103.

Specifically, the control module 1 determines whether a pick-up operation for goods is performed by the user after the cabinet door 3 is unlocked according to the multi-frame images captured by virtue of the camera module 4. If the pick-up operation for goods is performed, then step 105 is performed; or else, the operation returns to step 103, and the multi-frame images at the cabinet door 3 are further captured until the cabinet door 3 is locked.

Step 105, recognizing a plurality of pick-up images from the multi-frame images.

Specifically, the control module 1 recognizes the plurality of pick-up images of the user from the multi-frame images captured by virtue of the camera module 4.

Step 106, determining whether any goods have been taken out according to the plurality of pick-up images. If yes, step 107 is performed; if not, the operation returns to step 103.

Specifically, the control module 1 determines whether the user takes out the goods according to the plurality of pick-up images; if it is determined that the user takes out the goods, step 107 is performed; or else, the user does not take out the goods although he/she performs the pick-up operation for goods, and the operation returns to step 103.

Step 107, acquiring goods information of the taken-out goods.

Specifically, the control module 1 acquires the goods information of the taken-out goods according to the pick-up images.

Step 108, detecting whether the cabinet door is locked. If yes, step 109 is performed; or else, the operation returns to step 103.

Specifically, when the user closes the cabinet door 3, the cabinet door 3 is automatically locked by the door lock 22; when the control module 1 detects that the cabinet door 3 is locked, the user completes goods taking out, and step 105 is performed; or else, the user does not complete the good taking out, the operation returns to step 103, and the multi-frame images at the cabinet door 3 are further captured by virtue of the camera module 4.

Step 109, completing a payment transaction with a payment account bound with the user at least according to the goods information.

Specifically, the control module 1 acquires the payment account bound with the user from the access command of the user and completes the payment transaction with the payment account bound with the user at least according to the goods information.

Compared with the related art, the cabinet door is unlocked and the camera module is started when the access command of the user is received, so that the multi-frame images at the cabinet door in the unlocking state may be captured by virtue of the camera module; next, it is determined whether the pick-up operation for goods is performed by the user according to the multi-frame images, and the pick-up images are recognized from the multi-frame images when it is determined that the pick-up operation for goods is performed; then, it is determined whether any goods have been taken out according to the plurality of pick-up images, the goods information of the taken-out goods is acquired when it is determined that the goods have been taken out, when it is detected that the cabinet door is locked, the user has completed goods taking out, and the payment transaction with the payment account bound with the user is completed at least according to the goods information. Therefore, the user may choose goods required by herself/himself by true touch, automatic settlement may be realized by closing a door after the goods are taken away, and thus, a process of cash or mobile payment performed by the user is omitted; and it may be relatively accurately judged whether the user takes out the goods. For the user, the overall shopping link may be completed by only opening the door, taking out the goods and closing the door, so that high convenience is achieved, and the shopping experience of the user is improved.

A second embodiment of the present disclosure relates to a method for automatic vending. The second embodiment is detailed on the basis of the first embodiment and mainly lies in that the plurality of steps in the first embodiment are introduced in detail.

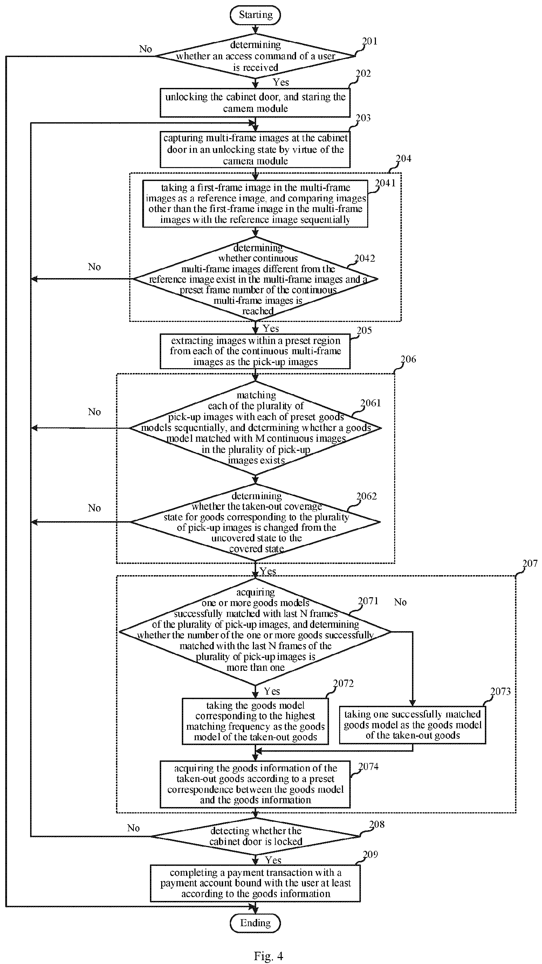

A specific process of the method for automatic vending in the present embodiment is shown as Fig. 4.

Steps 201 to 203 are approximately identical to steps 101 to 103, the descriptions thereof are omitted herein, and main differences between the first embodiment and the second embodiment are as follows.

Step 204, determining whether a pick-up operation for goods is performed by the user according to multi-frame images.

Specifically, the step is that determining whether it is detected that the user stretches a hand into or out of the cabinet body according to the multi-frame images, and specifically includes the following sub-steps.

Sub-step 2041, taking a first-frame image in the multi-frame images as a reference image, and comparing images other than the first-frame image in the multi-frame images with the reference image sequentially.

Specifically, the first-frame image in the multi-frame images is an image that the user does not stretch the hand into the cabinet body, and the control module 1 takes the first-frame image as the reference image and sequentially compares other images in the multi-frame images with the reference image so as to judge whether the user stretches the hand into or out of the cabinet body 2. In one embodiment, a preset region of the first-frame image in the multi-frame images is the reference image, for example, an intermediate 20x480 region is taken as the reference image, preset regions (identical to the preset region selected by the first-frame image) of images except the first-frame image in the multi-frame images are sequentially compared with the reference image, and thus, it may also be determined whether the user stretches the hand into or out of the cabinet body 2.

Sub-step 2042, determining whether continuous multi-frame images different from the reference image exist in the multi-frame images and a preset frame number of the continuous multi-frame images is reached. If yes, step 205 is performed; if not, the operation returns to step 203.

Specifically, it is possible that a certain frame of image or some frames of images are different from the reference image due to the interference, however, in fact, the user does not stretch the hand into or out of the cabinet body 2. When the continuous multi-frame images in the multi-frame images are different from the reference image and the frame number of the continuous multi-frame images reaches the preset value, the control module 1 determines that it is detected that the user stretches the hand into or out of the cabinet body, and step 205 is performed, where the continuous multi-frame images are images generated in a period from a process that the user stretches the hand into the cabinet body 2 to a process that the user stretches the hand out of the cabinet body 2; or else, it is not detected that the user stretches the hand into or out of the cabinet body, the operation returns to step 203, and the control module 1 further captures the multi-frame images at the cabinet door 3 by virtue of the camera module 4 until the cabinet door 3 is locked.

Step 205, extracting images within a preset region from each of the continuous multi-frame images as the pick-up images. The step specifically includes the following.

Specifically, the images within the preset region include images of the hand of the user and images that the user holds the goods in the hand, in this way, the images within the preset region may be used as the pick-up images, and the image in the preset region is extracted from each frame of image in the continuous multi-frame images, so that the plurality of pick-up images may be obtained.

Step 206, determining whether any goods have been taken out according to the plurality of pick-up images. The step specifically includes the following sub-steps.

Sub-step 2061, matching each of the plurality of pick-up images with each of preset goods models sequentially, and determining whether a goods model matched with M continuous images in the plurality of pick-up images exists.

Specifically, a plurality of goods models are prestored in the apparatus for automatic vending and are subjected to machine learning to obtain the images that the user holds the goods in the hand with various angles and postures, each of the pick-up images is sequentially matched with each of the goods models, and a taken-out coverage state for goods corresponding to the pick-up images is set as a covered state when it is determined that the goods model matched with M continuous images exist, at the moment, the user holds the goods in the hand; or else, the taken-out coverage state for goods corresponding to the pick-up images is set as an uncovered state, which proves that the user does not hold the goods in the hand. Specifically, when each of the pick-up images is sequentially matched with each of the goods models, firstly, the first M frames of continuous images in the plurality of pick-up images are sequentially matched with each of the preset goods models, that is, the pick-up images that the user stretches the hand into the cabinet body 2 are matched with each of the preset goods models, so that it is determined whether the user holds the goods in the hand, and when the user holds the goods in the hand, the goods models of the goods in the user's hand may be recognized. When the user is picking up the goods on the shelf 5, the taken-out coverage state for goods corresponding to the plurality of pick-up images is set as the uncovered state, which proves that the user has no goods in the hand. When the user completes goods taking out and stretches the hand out of the cabinet body, the last M frames of continuous images in the plurality of pick-up images are sequentially matched with each of the preset goods models, that is, the pick-up images that the user stretches the hand out of the cabinet body 2 are matched with each of the preset goods models, so that it is determined whether the user takes out the goods from the shelf 5. M is a positive integer and is smaller than the total frame number of the continuous multi-frame images.

Sub-step 2062, determining whether the taken-out coverage state for goods corresponding to the plurality of pick-up images is changed from the uncovered state to the covered state.

Specifically, when the user's hand picks up the goods on the shelf 5, the taken-out coverage state for goods corresponding to the plurality of pick-up images is the uncovered state. When the taken-out coverage state is changed from the uncovered state to the covered state, the user holds the goods in the hand, that is, the user has taken out the goods from the shelf 5 after the user stretches the hand out of the cabinet body 2. When repeated goods taken-out and exchange operations are performed by the user, the goods taken out from the shelf 5 and the goods put on the shelf 5 by the user are required to be recognized. When the user needs to stretch the hand into the cabinet body 2 during goods exchange, types of the goods put into the cabinet body 2 are recognized, and the models of the goods taken out when the user stretches the hand out of the cabinet body 2 are recognized, so that the number of the goods taken out by the user and kinds of the taken-out goods are specifically acquired.

Step 207, acquiring the goods information of the taken-out goods. The step specifically includes the following sub-steps.

Sub-step 2071, acquiring one or more goods models successfully matched with last N frames of the plurality of pick-up images, and determining whether the number of the one or more goods successfully matched with the last N frames of the plurality of pick-up images is more than one. If yes, sub-step 2072 is performed; if not, sub-step 2073 is performed.

Specifically, the goods models successfully matched with last N frames of the plurality of pick-up images are acquired according to a matching result in sub-step 2061, and one or a plurality of the goods models may be successfully matched; when the plurality of goods models are successfully matched, sub-step 2072 is performed; or else, when one of the goods models is successfully matched, sub-step 2073 is performed. N is a positive integer and is smaller than the total frame number of the continuous multi-frame images.

Sub-step 2072, taking the goods model corresponding to the highest matching frequency as the goods model of the taken-out goods.

Specifically, if the plurality of the goods models are successfully matched, the goods model with the highest successful matching frequency is the goods model of the taken-out goods.

Sub-step 2073, taking one successfully matched goods model as the goods model of the taken-out goods.

Specifically, if one of the goods models is successfully matched, the successfully matched goods model is the goods model of the taken-out goods.

Sub-step 2074, acquiring the goods information of the taken-out goods according to a preset correspondence between the goods model and the goods information.

Specifically, the preset correspondence between the goods model and the goods information is prestored in the apparatus for automatic vending, and the goods information of the taken-out goods may be acquired according to the goods model of the taken-out goods in sub-step 2073.

Compared with the first embodiment, the present embodiment details a plurality of steps in the first embodiment.

A third embodiment of the present disclosure relates to a method for automatic vending, which is an improvement on the first embodiment, and the main improvement is that: change information of the weight of the shelf is detected by virtue of a plurality of gravity sensors.

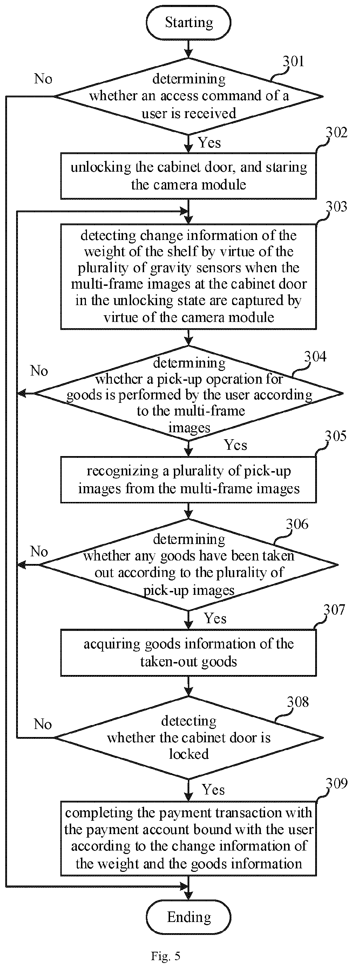

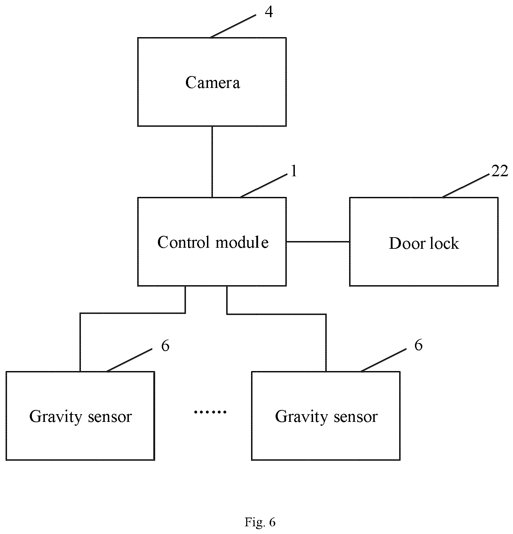

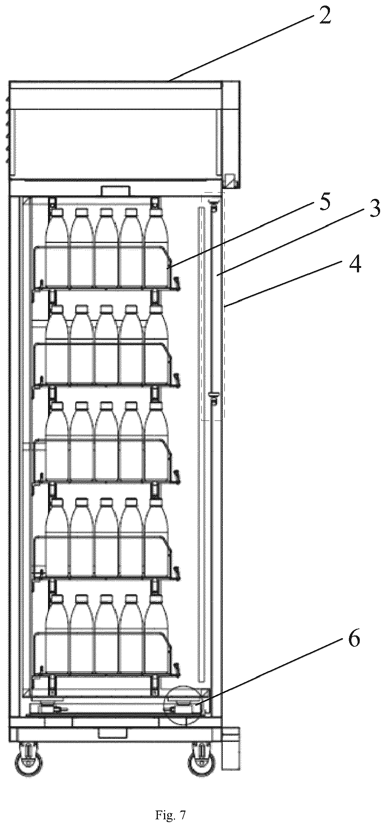

A specific process of the method for automatic vending in the present embodiment is shown as Fig. 5. The apparatus for automatic vending in the present embodiment, with reference to Fig. 6 and Fig. 7, further includes a plurality of gravity sensors 6 arranged at the bottom of the shelf 5 and connected to the control module 1.

Steps 301 and 302 are approximately identical to steps 101 and 102, and steps 304 to 308 are approximately identical to steps 104 and 108, the descriptions thereof are omitted herein, and main differences between the first embodiment and the third embodiment are as follow.

Step 303, detecting change information of the weight of the shelf by virtue of the plurality of gravity sensors when the multi-frame images at the cabinet door in the unlocking state are captured by virtue of the camera module.

Specifically, the plurality of gravity sensors are arranged at the bottom of the shelf 5 to detect the change information of the weight of the shelf 5. The change information of the weight of the shelf is detected by virtue of the plurality of gravity sensors 6 when the multi-frame images at the cabinet door 3 are captured by virtue of the camera module 4.

Step 309, completing the payment transaction with the payment account bound with the user according to the change information of the weight and the goods information.

Specifically, in a period from an unlocking state to a locking state of the cabinet door 3, when the plurality of gravity sensors 6 detects that the weight of the shelf 5 is reduced, the user takes out the goods from the shelf 5. When the plurality of gravity sensors 6 detects that the weight of the shelf 5 is unchanged, the user does not take out the goods from the goods shelf 5. In this way, the payment transaction with the payment account bound with the user may be completed according to the change information of the weight and the goods information.

Optionally, in the present embodiment, different weight thresholds may be set according to the weights of the different goods. When the weight change of the shelf, detected by the gravity sensors 6, is smaller than the weight thresholds, the user does not take out the goods from the shelf 5. When the weight change of the shelf, detected by the gravity sensors 6, is greater than the weight thresholds, the user takes out the goods from the shelf 5.

Compared with the first embodiment, the bottom of the shelf is provided with the gravity sensors for detecting the change information of the weight of the shelf. When the weight of the shelf is reduced, the user takes out the goods, and therefore, the accuracy of judging whether the user takes out the goods is improved in combination with the change information of the weight and the goods information. It should be noted that the present embodiment may also be improved on the basis of the second embodiment and may achieve the same technical effects.

A fourth embodiment of the present disclosure relates to a method for automatic vending, which is an improvement on the first embodiment, and the main improvement is that: change information of a distance from goods on corresponding goods channel to the rear end of the goods channel is acquired by virtue of each of distance sensors.

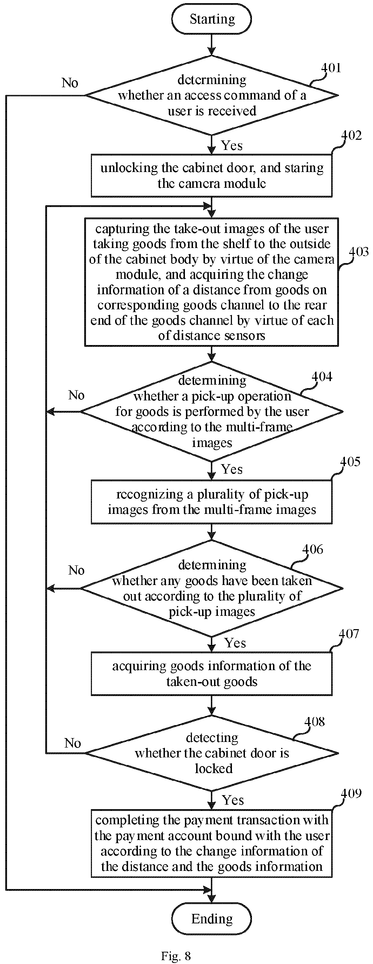

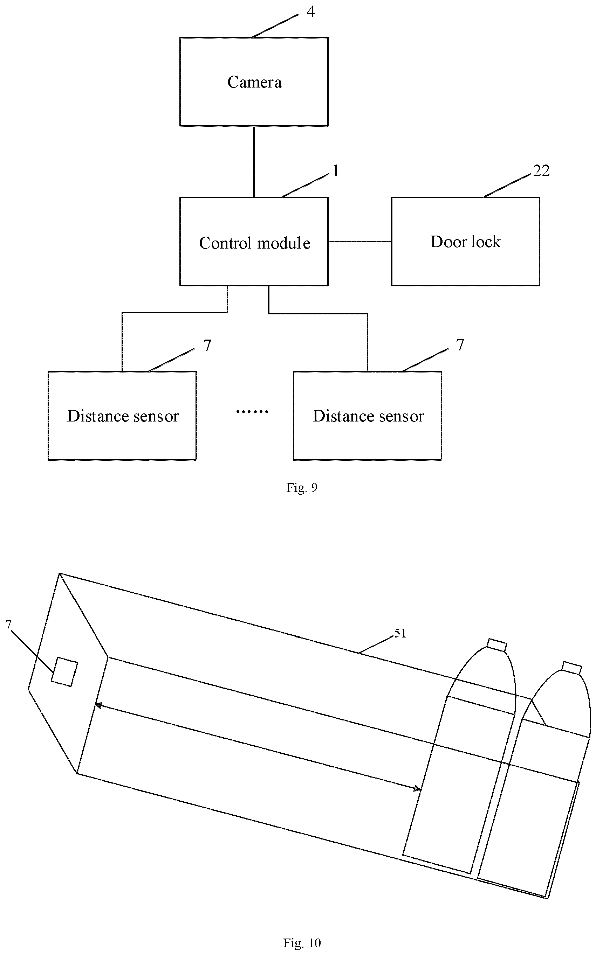

A specific process of the method for automatic vending in the present embodiment is shown as Fig. 8. The apparatus for automatic vending in the present embodiment, with reference to Fig. 9 and Fig. 10, further includes a plurality of distance sensors 7, the shelf 5 includes a plurality of goods channels 51; each of the goods channels 51 is for storing goods by users and is downwards inclined to the cabinet door 3; the distance sensors 8 are equal to the goods channels 51 in number and are in one-to-one correspondence to the goods channels 51; and all the distance sensors 8 are fixedly arranged at the rear ends of the corresponding goods channels 51 and are connected to the control module 1.

Steps 401 and 402 are approximately identical to steps 101 and 102, and steps 404 to 408 are approximately identical to steps 104 and 108, the descriptions thereof are omitted herein, and main differences between the first embodiment and the fourth embodiment are as follow.

Step 403, capturing the take-out images of the user taking goods from the shelf to the outside of the cabinet body by virtue of the camera module, and acquiring the change information of a distance from goods on corresponding goods channel to the rear end of the goods channel by virtue of each of distance sensors.

Specifically, the change information of the distance from the goods on the corresponding goods channels 51 to the rear ends of the goods channels 51 is acquired by virtue of the distance sensors 7 arranged at the rear ends of all the goods channels 51 when the take-out images that the user takes the goods from the shelf 5 to the outside of the cabinet body 2 are captured by virtue of the camera module 4.

Step 409, completing the payment transaction with the payment account bound with the user according to the change information of the distance and the goods information.

Specifically, since the goods channels 51 are downwards inclined to the cabinet door 3, during the process of taking out the goods, goods at the rear may slide downwards under the action of gravity, and a distance from the goods to the rear ends of the goods channels 51 is increased. That is, when the change information of the distance acquired by the distance sensors 7 is increased, goods on the goods channels 51 corresponding to the distance sensors 7 are taken out; otherwise, no goods are taken out. The control module 1 completes the payment transaction with the payment account bound with the user according to the change information of the distance, detected by the plurality of distance sensors 7, and the goods taken-out images.

Compared with the first embodiment, the rear ends of all the goods channels are provided with the distance sensors for acquiring the change information of the distance from the rear ends of the goods channels to the goods. When the distance is increased, the user takes out the goods, and therefore, the accuracy of judging whether the user takes out the goods is improved in combination with the change information of the distance and the goods information. It should be noted that the present embodiment may also be improved on the basis of the second embodiment or the third embodiment and may achieve the same technical effects.

A fifth embodiment of the present disclosure relates to a method for automatic vending. The present embodiment is detailed on the basis of the first embodiment and mainly lies in that a specific implementation manner of completing the payment transaction with the user is provided.

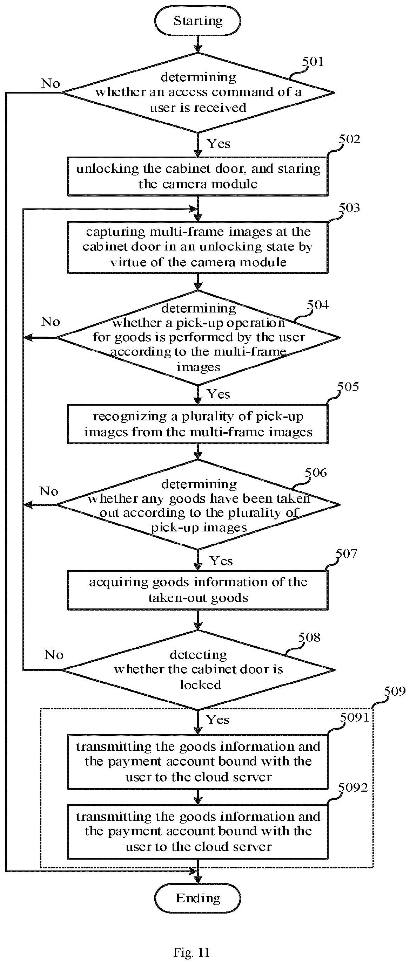

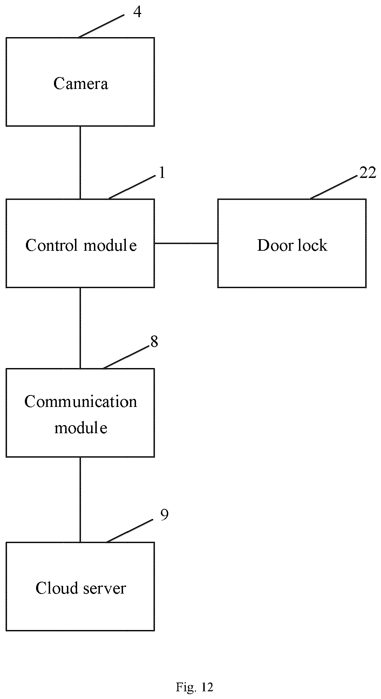

A specific process of the method for automatic vending in the present embodiment is shown as Fig. 11. The apparatus for automatic vending in the present embodiment with reference to Fig. 12, further includes a communication module 8, and the control module is connected to a cloud server 9 by the communication module 8.

Steps 502 to 508 are approximately identical to steps 102 to 108, the descriptions thereof are omitted herein, and main differences between the first embodiment and the fifth embodiment are as follows.

Step 501, determining the access command of a user is received. In the step, two manners of receiving the access command of the user are specifically described as follows.

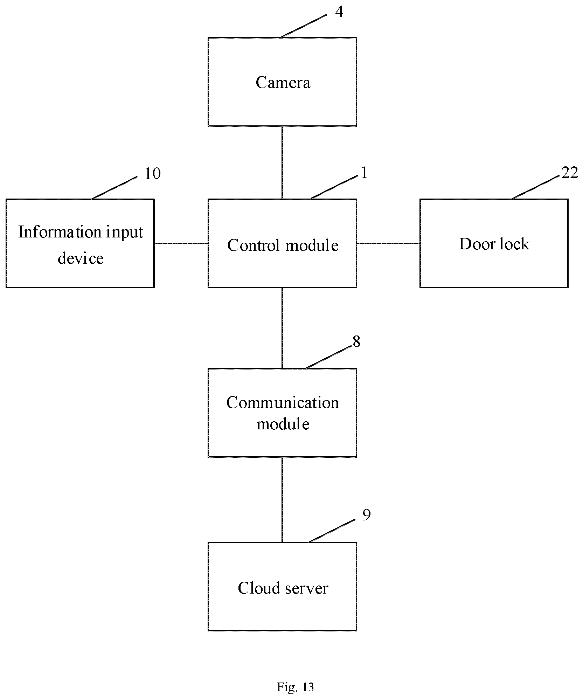

For the first manner, referring to Fig. 13, the apparatus for automatic vending further includes an information input device 10 connected to the control module 1, and the information input device 10 is fixedly arranged on the outer wall of the cabinet body 2. The information input device 10 is any one or any combination of a touch panel, a fingerprint identification sensor, an iris identification sensor, a face identification sensor and a palmprint identification sensor described as follows.

The control module 1 receives the access command of the user by virtue of the information input device 10, verifies the user by virtue of the cloud server 9 upon receiving the access command of the user, and unlocks the cabinet door 3 and starts the camera module 4 when the verification is passed. Specifically, account information of all users is stored in the cloud server 9, log-in information of the user in the access command of the user is transmitted to the cloud server 9 by the control module 1 so as to be verified, and the control module 1 unlocks the cabinet door 3 and starts the camera module 4 when the verification is passed. When the information input device 10 is the touch panel, the user may directly log in a registered account on the touch panel. When the information input device 10 is the fingerprint identification sensor, the iris identification sensor, the face identification sensor or the palmprint identification sensor, corresponding biological identification information has been bound when the user registers the account, and thus, the account may be logged in according to the biological identification information.

For the second manner, the cabinet body 2 is further provided with an identification code which may be a two-dimensional code, a bar code and the like. When the user scans the identification code by using a mobile terminal, the mobile terminal transmits log-in information to the cloud server 9, account information of all users is stored in the cloud server 9, and thus, the log-in information may be verified; the cloud server 9 transmits the access command of the user to the control module 1 when the verification is passed; and the control module 1 unlocks the cabinet door 3 and starts the camera module 4 when receiving the access command of the user from the cloud server 9. The identification code may be displayed on one touch panel, and when scanning the identification code by using a mobile terminal, the user may perform scanning by using, but not limited to an application program specially provided by the apparatus for automatic vending and may also perform scanning by using an application program such as WeChat and Alipay.

Step 509, completing the payment transaction with the payment account bound with the user at least according to the goods information. The step specifically includes as follows.

Sub-step 5091, transmitting the goods information and the payment account bound with the user to the cloud server.

Specifically, the control module 1 acquires the payment account bound with the user from the access command of the user, and then transmits the goods information of the taken-out goods and the payment account bound with the user to the cloud server 9.

Sub-step 5092, completing the payment transaction by virtue of the cloud server.

Specifically, the payment account bound with the user is debited according to a goods price in the goods information.

Compared with the first embodiment, the present embodiment provides a specific implementation manner of completing payment transaction with the user. It should be noted that the present embodiment may also be detailed on the basis of the second embodiment to the fourth embodiment, and thus, the same technical effect may be achieved.

As shown in Fig. 1 and Fig. 2, an embodiment of the present disclosure provides an apparatus for automatic vending, including a control module 1, a cabinet body 2, at least one cabinet door 3 and at least one camera module 4. The cabinet body 2 is provided with a shelf 5 for storing goods.

The control module 1 is configured to unlock the cabinet door and start the camera module when an access command of a user is received; to capture multi-frame images at the cabinet door in an unlocking state by virtue of the camera module; to determine whether a pick-up operation for goods is performed by the user according to the multi-frame images; to recognize a plurality of pick-up images from the multi-frame images when the pick-up operation is performed; to determine whether goods are taken out according to the plurality of pick-up images; if the goods are taken out, to acquire goods information of the taken-out goods; and to complete a payment transaction with a payment account bound with the user at least according to the goods information when detecting that the cabinet door is locked.

The camera module 4 is configured to capture the multi-frame images at the cabinet door in the unlocking state.

Optionally, the control module 1 is specifically configured to: determine whether it is detected that the user stretches a hand into or out of the cabinet body according to the multi-frame images.

Optionally, the control module 1 is specifically configured to: take a first-frame image in the multi-frame images as a reference image, compare images other than the first-frame image in the multi-frame images with the reference image sequentially; and determine that it is detected that the user stretches the hand into or out of the cabinet body, when continuous multi-frame images different from the reference image exist in the multi-frame images and a preset frame number of the continuous multi-frame images is reached.

Optionally, the control module 1 is specifically configured to: extract images within a preset region from each of the continuous multi-frame images as the plurality of pick-up images, match each of the plurality of pick-up images with each of preset goods models sequentially, and determine whether a goods model matched with M continuous images in the plurality of pick-up images exists; if yes, set a taken-out coverage state for goods corresponding to the plurality of pick-up images as a covered state; and if not, set a taken-out coverage state for goods corresponding to the plurality of pick-up images as an uncovered state, where M is a positive integer and is smaller than the total frame number of the continuous multi-frame images; and determine that there are goods that have been taken out when the taken-out coverage state for goods corresponding to the plurality of pick-up images is changed from the uncovered state to the covered state.

Optionally, the control module 1 is specifically configured to: acquire one or more goods models successfully matched with last N frames of the plurality of pick-up images, and determine whether a number of the one or more goods models successfully matched with the last N frames of the plurality of pick-up images is more than one, where N is a positive integer and is smaller than the total frame number of the continuous multi-frame images; take the goods model corresponding to the highest matching frequency as the goods model of the taken-out goods when determining that the number of the one or more goods models successfully matched with the last N frames of the plurality of pick-up images is more than one; take the one successfully matched goods model as the goods model of the taken-out goods when determining that the number of the one or more the goods model successfully matched with the last N frames of images of the plurality of pick-up images is one; and acquire the goods information of the taken-out goods according to a preset correspondence between the goods model and the goods information.

Optionally, as shown in Fig. 6 and Fig. 7, the apparatus for automatic vending further includes a plurality of gravity sensors 6 arranged at the bottom of the shelf.

The control module 1 is configured to detect change information of the weight of the shelf by virtue of the plurality of gravity sensors when capturing the multi-frame images at the cabinet door in the unlocking state by virtue of the camera module; and to complete the payment transaction with the payment account bound with the user according to the change information of the weight and the goods information.

The gravity sensors 6 are configured to detect the change information of the weight of the shelf.

Optionally, as shown in Fig. 6 and Fig. 7, the apparatus for automatic vending further includes a plurality of distance sensors 7, and the distance sensors 7 are equal to goods channels in number and are in one-to-one correspondence to the goods channels.

The control module 1 is configured to acquire change information of a distance from goods on the corresponding goods channel to the rear end of the goods channel by virtue of each of the distance sensors when the multi-frame images at the cabinet door in the unlocking state are captured by virtue of the camera module; and to complete payment transaction with the payment account bound with the user according to the change information of the distance and the goods information.

The distance sensors 7 are configured to acquire the change information of the distance from the goods on the corresponding goods channels to the rear ends of the goods channels.

Optionally, as shown in Fig. 12, the apparatus for automatic vending further includes a communication module 8.

The control module 1 is configured to transmit the goods information and the payment account bound with the user to the cloud server 9; and to complete the payment transaction by virtue of the cloud server 9.

The communication module 8 is configured to connect the control module 1 with the cloud server 9.

Optionally, as shown in Fig. 13, the apparatus for automatic vending further includes an information input device 10 connected to the control module.

The control module 1 is configured to receive the access command of the user by virtue of the information input device, verify the user by virtue of the cloud server upon receiving the access command, and unlock the cabinet door and start the camera module when the verification is passed.

The information input device 10 is configured to receive the access command of the user.

Optionally, the cabinet body is provided with an identification code. The access command of the user is received from the cloud server after verification of the log-in information is passed, and the log-in information is transmitted by a mobile terminal to the cloud server by scanning the identification code.

An embodiment of the present disclosure further provides a readable storage medium of a computer device for the automatic vending method, that is, contents are not lost after power failure. The storage medium stores a software program including a program code, and a solution of any one of above-mentioned apparatuses for automatic vending may be implemented when the program code operates on the computer device and the software program is read and executed by one or more control modules.

Those of ordinary skilled in the art should understand that each of the above-mentioned embodiments serves as a specific embodiment of the present disclosure, and during actual disclosure, the embodiments may be subjected to various changes in terms of form and detail without departing from the spirit and scope of the present disclosure.

## Claims

1. A method for automatic vending, **characterized by** being applied to an apparatus for automatic vending, wherein the apparatus for automatic vending comprises a control module, a cabinet body, at least one cabinet door and at least one camera module, and the cabinet body is provided with a shelf for storing goods; and
the method comprises:
unlocking the at least one cabinet door and starting the at least one camera module in response to an access command of a user;
capturing multi-frame images at the at least one cabinet door in an unlocking state by virtue of the at least one camera module;
determining whether a pick-up operation for goods is performed by the user according to the multi-frame images;
recognizing a plurality of pick-up images from the multi-frame images when the pick-up operation for goods is performed;
determining whether any goods have been taken out according to the plurality of pick-up images;
acquiring goods information of taken-out goods when goods have been taken out; and
completing a payment transaction with a payment account bound with the user at least according to the goods information upon detecting that the at least one cabinet door is locked.

2. The method for automatic vending according to claim 1, the determining whether the pick-up operation for goods is performed by the user according to the multi-frame images, comprises:
determining whether it is detected that the user stretches a hand into or out of the cabinet body according to the multi-frame images.

3. The method for automatic vending according to claim 2, the determining whether it is detected that the user stretches the hand into or out of the cabinet body according to the multi-frame images, comprises:
taking a first-frame image in the multi-frame images as a reference image;
comparing images other than the first-frame image in the multi-frame images with the reference image sequentially; and
determining that it is detected that the user stretches the hand into or out of the cabinet body, when continuous multi-frame images different from the reference image exist in the multi-frame images and a preset frame number of the continuous multi-frame images is reached.

4. The method for automatic vending according to claim 3, the recognizing a plurality of pick-up images from the multi-frame images, comprises:
extracting images within a preset region from each of the continuous multi-frame images as the plurality of pick-up images; and
the determining whether any goods have been taken out according to the plurality of pick-up images, comprises:
matching each of the plurality of pick-up images with each of preset goods models sequentially;
determining whether a goods model matched with M continuous images in the plurality of pick-up images exists; wherein
when the goods model matched with the M continuous images exists, a taken-out coverage state for goods corresponding to the plurality of pick-up images is set as a covered state; and
when the goods model matched with the M continuous images does not exist, a taken-out coverage state for goods corresponding to the plurality of pick-up images is set as an uncovered state, and
wherein M is a positive integer and is smaller than a total frame number of the continuous multi-frame images; and
determining that there are goods that have been taken out when the taken-out coverage state for goods corresponding to the plurality of pick-up images is changed from the uncovered state to the covered state.

5. The method for automatic vending according to claim 4, the acquiring the goods information of the taken-out goods, comprises:
acquiring one or more goods models successfully matched with last N frames of the plurality of pick-up images; and
determining whether a number of the one or more goods models successfully matched with the last N frames of the plurality of pick-up images is more than one, wherein N is a positive integer and is smaller than the total frame number of the continuous multi-frame images; wherein
when determining that the number of the one or more goods models successfully matched with the last N frames of the plurality of pick-up images is more than one, a goods model corresponding to a highest matching frequency is a goods model of the taken-out goods; and
when determining that the number of the one or more goods models successfully matched with the last N frames of the plurality of pick-up images is one, a successfully matched goods model is a goods model of the taken-out goods; and
acquiring the goods information of the taken-out goods according to a preset correspondence between the goods model and the goods information.

6. The method for automatic vending according to claim 1, wherein the apparatus for automatic vending further comprises a plurality of gravity sensors arranged at a bottom of the shelf;
change information of a weight of the shelf is detected by virtue of the plurality of gravity sensors, when the multi-frame images at the at least one cabinet door in the unlocking state are captured by virtue of the at least one camera module; and
the completing the payment transaction with the payment account bound with the user at least according to the goods information, comprises:
completing the payment transaction with the payment account bound with the user according to the change information of the weight and the goods information.

7. The method for automatic vending according to claim 1, wherein the shelf comprises a plurality of goods channels, and each of the plurality of goods channels is for storing goods; and the apparatus for automatic vending further comprises a plurality of distance sensors, and the plurality of distance sensors are equal to the plurality of goods channels in number and are in one-to-one correspondence to the plurality of goods channels;
change information of a distance from goods on a corresponding goods channel to a rear end of the corresponding goods channel is acquired by virtue of each of the plurality of distance sensors, when the multi-frame images at the at least one cabinet door in the unlocking state are captured by virtue of the at least one camera module; and
the completing the payment transaction with a payment account bound with the user at least according to the goods information, comprises:
completing the payment transaction with the payment account bound with the user according to the change information of the distance and the goods information.

8. The method for automatic vending according to claim 1, wherein the apparatus for automatic vending further comprises a communication module, and the control module is connected to a cloud server by the communication module; and
the completing the payment transaction with the payment account bound with the user at least according to the goods information, comprises:
transmitting the goods information and the payment account bound with the user to the cloud server; and
completing the payment transaction by virtue of the cloud server.

9. The method for automatic vending according to claim 8, wherein the apparatus for automatic vending further comprises an information input device connected to the control module; and
the unlocking the at least one cabinet door and starting the at least one camera module in response to the access command of the user, comprises:
receiving the access command of the user by virtue of the information input device;
verifying the user by virtue of the cloud server upon receiving the access command; and
unlocking the at least one cabinet door and starting the at least one camera module upon a verification is passed.

10. The method for automatic vending according to claim 8, wherein the cabinet body is provided with an identification code; and
the access command of the user is received from the cloud server after verification of log-in information is passed, and the log-in information is transmitted by a mobile terminal to the cloud server by scanning the identification code.

11. An apparatus for automatic vending, **characterized by** comprising a control module, a cabinet body, at least one cabinet door and at least one camera module, wherein the cabinet body is provided with a shelf for storing goods;
the control module is configured to:
unlock the at least one cabinet door and start the at least one camera module in response to an access command of a user;
capture multi-frame images at the at least one cabinet door in an unlocking state by virtue of the at least one camera module;
determine whether a pick-up operation for goods is performed by the user according to the multi-frame images;
recognize a plurality of pick-up images from the multi-frame images when the pick-up operation for goods is performed;
determine whether any goods have been taken out according to the plurality of pick-up images;
acquire goods information of taken-out goods when goods have been taken out; and
complete a payment transaction with a payment account bound with the user at least according to the goods information upon detecting that the at least one cabinet door is locked; and
the at least one camera module is configured to capture the multi-frame images at the at least one cabinet door in the unlocking state.

12. The apparatus according to claim 11, wherein the control module is further configured to:
determine whether it is detected that the user stretches a hand into or out of the cabinet body according to the multi-frame images.

13. The apparatus according to claim 12, wherein the control module is further configured to:
take a first-frame image in the multi-frame images as a reference image;
compare images other than the first-frame image in the multi-frame images with the reference image sequentially; and
determine that it is detected that the user stretches the hand into or out of the cabinet body, when continuous multi-frame images different from the reference image exist in the multi-frame images and a preset frame number of the continuous multi-frame images is reached.

14. The apparatus according to claim 13, wherein the control module is further configured to:
extract images within a preset region from each of the continuous multi-frame images as the plurality of pick-up images;
match each of the plurality of pick-up images with each of preset goods models sequentially;
determine whether a goods model matched with M continuous images in the plurality of pick-up images exists; wherein
when the goods model matched with the M continuous images exists, a taken-out coverage state for goods corresponding to the plurality of pick-up images is set as a covered state; and
when the goods model matched with the M continuous images does not exist, a taken-out coverage state for goods corresponding to the plurality of pick-up images is set as an uncovered state; and
wherein M is a positive integer and is smaller than a total frame number of the continuous multi-frame images; and
determine that there are goods that have been taken out when the taken-out coverage state for goods corresponding to the plurality of pick-up images is changed from the uncovered state to the covered state.

15. The apparatus according to claim 14, wherein the control module is further configured to:
acquire one or more goods models successfully matched with last N frames of the plurality of pick-up images; and
determine whether a number of the one or more goods models successfully matched with the last N frames of the plurality of pick-up images is more than one, wherein N is a positive integer and is smaller than the total frame number of the continuous multi-frame images; wherein
when determining that the number of the one or more goods models successfully matched with the last N frames of the plurality of pick-up images is more than one, a goods model corresponding to a highest matching frequency is a goods model of the taken-out goods; and
when determining that the number of the one or more goods models successfully matched with the last N frames of the plurality of pick-up images is one, a successfully matched goods model is a goods model of the taken-out goods; and
acquire the goods information of the taken-out goods according to a preset correspondence between the goods model and the goods information.

16. The apparatus according to claim 11, further comprising a plurality of gravity sensors arranged at a bottom of the shelf;
the control module is configured to:
detect change information of a weight of the shelf by virtue of the plurality of gravity sensors, when capturing the multi-frame images at the at least one cabinet door in the unlocking state by virtue of the at least one camera module; and
complete the payment transaction with the payment account bound with the user according to the change information of the weight and the goods information; and
the plurality of gravity sensors are configured to:
detect the change information of the weight of the shelf.

17. The apparatus according to claim 11, further comprising a plurality of distance sensors, wherein the plurality of distance sensors are equal to goods channels in number and are in one-to-one correspondence to the goods channels;
the control module is configured to:
acquire change information of a distance from goods on a corresponding goods channel to a rear end of the corresponding goods channel by virtue of each of the plurality of distance sensors, when the multi-frame images at the at least one cabinet door in the unlocking state are captured by virtue of the at least one camera module; and
complete the payment transaction with the payment account bound with the user according to the change information of the distance and the goods information; and
the plurality of distance sensors are configured to:
acquire the change information of the distance from the goods on the corresponding goods channel to the rear end of the corresponding goods channel.

18. The apparatus according to claim 11, further comprising a communication module, wherein
the control module is configured to:
transmit the goods information and the payment account bound with the user to a cloud server; and
complete the payment transaction by virtue of the cloud server; and
the communication module is configured to:
connect the control module with the cloud server.

19. The apparatus according to claim 18, further comprising an information input device connected to the control module, wherein
the control module is configured to:
receive the access command of the user by virtue of the information input device;
verify the user by virtue of the cloud server upon receiving the access command; and
unlock the at least one cabinet door and start the at least one camera module upon a verification is passed; and
the information input device is configured to:
receive the access command of the user.

20. The apparatus according to claim 18, wherein the cabinet body is provided with an identification code; and
the access command of the user is received from the cloud server after verification of log-in information is passed, and the log-in information is transmitted by a mobile terminal to the cloud server by scanning the identification code.
